# EUROPÄISCHE PATENTANMELDUNG

(11) **EP 2 416 008 A1**
(43) Veröffentlichungstag der Anmeldung: **08.02.2012**
(21) Anmeldenummer: 11174783.8
(22) Anmeldetag: 21.07.2011
(51) Int. Cl.: F03D 11/00, F04B 53/20, F04B 53/16, F04B 53/18, F04B 53/22

(54) **Kombiniertes Pumpen- und Filtermodul**

(30) Priorität: 07.08.2010 DE 202010011160 U
(71) Anmelder: MAHLE International GmbH, 70376 Stuttgart (DE)
(72) Erfinder: Hesse, Gernot, 74613 Öhringen (DE); Kress, Achim, 74635 Kupferzell (DE); Kuhn, Harald, 74196 Neuenstadt a. Kocher (DE); Müller, Florian, 74535 Mannhardt (DE); Schick, Albert, 74336 Brackenheim (DE)
(74) Vertreter: BRP Renaud & Partner

(57) **Zusammenfassung**

Kombiniertes Pumpen- und Filtermodul (1) insbesondere für Windkraftanlagen mit einem Modulgehäuse (2), welches eine Aufnahme (3,5) für eine Pumpe (4) und eine Filtereinrichtung (6) aufweist, wobei in dem Modulgehäuse (2) auch zugehörige Leitungen (7) und Ventile integriert sind.

## Beschreibung

Die vorliegende Erfindung betrifft ein kombiniertes Pumpen- und Filtermodul insbesondere für Windkraftanlagen.

Aufgrund der Vielzahl von einzelnen Komponenten im Filter- und Pumpenbereich ist eine Montage derartiger Einzelkomponenten üblicherweise relativ aufwändig, wobei insbesondere bei einer Schmierstoffversorgung eine Pumpe sowie eine Filtereinrichtung oftmals separat und insbesondere in separaten Gehäusen angeordnet sind.

Die vorliegende Erfindung beschäftigt sich mit dem Problem, insbesondere eine Montage einer Filtereinrichtung und einer Pumpe an entsprechenden weiteren Komponenten zu vereinfachen.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein kombiniertes Pumpen und Filtermodul zu schaffen, welches insbesondere bei Windkraftanlagen eingesetzt wird und welches ein einziges, insbesondere einstückiges, Modulgehäuse aufweist, das eine Aufnahme für eine Pumpe und eine Filtereinrichtung besitzt. Zudem sind in dem erfindungsgemäßen Modulgehäuse auch die zugehörigen Leitungen, das heißt insbesondere Ver- und Entsorgungsleitungen für die Pumpe und die Filtereinrichtung integriert. Bei dem erfindungsgemäßen kombinierten Pumpen- und Filtermodul steht somit lediglich ein einziges Modulgehäuse zur Verfügung, welches entsprechende Aufnahmen für die Pumpe und die Filtereinrichtung aufweist, wodurch die Montage eines derartigen kombinierten Pumpen- und Filtermoduls, insbesondere an einer Windkraftanlage, deutlich vereinfacht werden kann. Von besonderem Vorteil ist dabei, dass durch die in das Modulgehäuse integrierten Leitungen eine Vielzahl an Dichtstellen, die Leitungen selbst sowie weitere Befestigungselement entfallen können, wodurch nicht nur ein Bauteilaufwand reduziert werden kann, sondern zugleich auch eine deutliche Kostenersparnis bei der Herstellung des erfindungsgemäßen Pumpen- und Filtermoduls erzielt werden kann. Das Modulgehäuse kann beispielsweise aus Aluminium, Kunststoff oder aus Grauguss ausgebildet sein.

Bei einer vorteilhaften Weiterbildung der erfindungsgemäßen Lösung, ist das Pumpen- und Filtermodul zur Versorgung einer Nabenschmierung eines Rotors einer Windkraftanlage mit Schmieröl ausgebildet. In diesem Fall dient das Pumpen- und Filtermodul somit zur Schmierung von Lagerstellen des Rotors einer Windkraftanlage, wobei selbstverständlich klar ist, dass das erfindungsgemäße Pumpen- und Filtermodul nicht nur auf diese Anwendung eingeschränkt ist, sondern beispielsweise auch bei Druckanlagen, wie insbesondere Hydraulikanlagen, eingesetzt werden kann. Denkbar ist neben einer rein stationären Anwendung des erfindungsgemäßen Pumpen- und Filtermoduls auch eine mobile, insbesondere in der Art einer auf einen Werkstattwagen montierten Anlagen, die beispielsweise zu einzelnen, zu wartenden Produktionsmaschinen gefahren werden kann und dort die Reinigung eines entsprechenden Fluides, beispielsweise Hydraulikflüssigkeit oder Schmieröl, übernimmt.

Zweckmäßig weist das Pumpen- und Filtermodul zumindest eine Ventileinrichtung, insbesondere ein Bypassventil und/oder ein Druckbegrenzungsventil, auf. Diese lediglich rein beispielhaft erwähnte Aufzählung zeigt dabei bereits, dass in das erfindungsgemäße Pumpen- und Filtermodul und insbesondere in dessen Modulgehäuse zusätzliche Komponenten, wie beispielsweise die erwähnten Ventileinrichtungen integrierbar sind. Hierdurch können weitere Montagevereinfachungen und insbesondere das Einsparen von Dichtstellen erzielt werden.

Bei einer weiteren vorteilhaften Ausführungsform der erfindungsgemäßen Lösung, ist das Modulgehäuse zur Aufnahme unterschiedlicher Pumpen und/oder zur Aufnahme unterschiedlicher Filtereinrichtungen ausgebildet. Dies bietet den großen Vorteil, dass auch für unterschiedlich große Filtereinrichtungen ein und dasselbe Modulgehäuse verwendet werden kann, wobei zum Anschluss unterschiedlicher Filtereinrichtungen an das erfindungsgemäße Modulgehäuse beispielsweise Adapterelemente eingesetzt werden können. Durch eine derartige Ausgestaltung des Modulgehäuses lässt sich dieses besonders breit und flexibel einsetzen, wodurch ebenfalls Kosteneinsparungen erreicht werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Ansicht auf eine mögliche Ausführungsform eines erfindungsgemäßen Pumpen- und Filtermoduls,
- Fig. 2: eine Schnittdarstellung durch ein Modulgehäuse des Pumpen- und Filtermoduls.

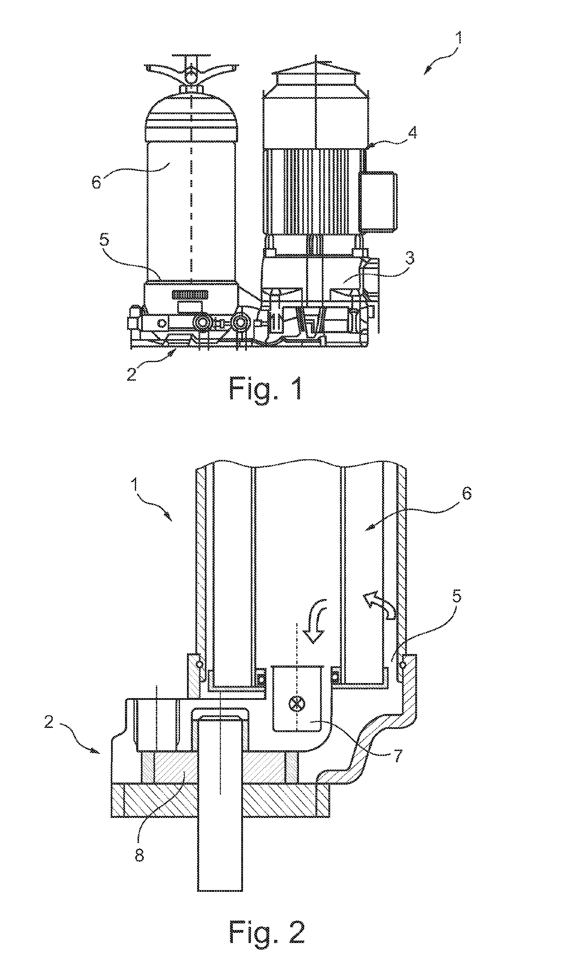

Entsprechend der Fig. 1, weist ein erfindungsgemäßes kombiniertes Pumpen- und Filtermodul 1 ein Modulgehäuse 2 auf, das eine Aufnahme 3 für eine Pumpe 4 sowie eine Aufnahme 5 für eine Filtereinrichtung 6 besitzt. Zum Anbau der Filtereinrichtung 6 sowie der Pumpe 4 ist somit lediglich ein einziges Modulgehäuse 2 erforderlich, anstatt bisher zwei separater Gehäuse, wodurch sich sowohl ein Montageaufwand als auch Herstellungskosten reduzieren lassen. In dem erfindungsgemäßen Modulgehäuse 2 sind zudem zugehörige Leitungen 7, vorzugsweise sämtliche Ver- und Entsorgungsleitungen für die Pumpe 4 und die Filtereinrichtung 6 sowie eventuell erforderliche Ventileinrichtungen integriert, so dass eine aufwändige externe Leitungsführung, verbunden mit den dabei auftretenden Dichtungsproblemen, vermieden werden können.

Das erfindungsgemäße Pumpen- und Filtermodul 1 kann beispielsweise zur Versorgung einer Nabenschmierung eines Rotors einer Windkraftanlage ausgebildet sein und übernimmt in dieser Funktion die Versorgung einer Lagerung des Rotors der Windkraftanlage beispielsweise mit Schmieröl. Ebenso einsetzbar ist das erfindungsgemäße Pumpen- und Filtermodul 1 bei Hydraulikanlagen, wobei nicht nur ein stationärer Betrieb, sondern zugleich auch ein mobiler Betrieb des erfindungsgemäßen Pumpen- und Filtermoduls 1 denkbar ist.

Betrachtet man die Fig. 1, so kann man erahnen, dass die Pumpe 4 selbst nicht in das Modulgehäuse integriert ist, sondern lediglich ein Rotor bzw. ein Pumpenrad 8 derselben (vgl. auch Fig. 2) wobei dieses Pumpenrad 8 mit einem Elektromotor der Pumpe 4 drehfest verbunden ist. Zusätzlich kann in das erfindungsgemäße Pumpen- und Filtermodul 1, insbesondere in das Modulgehäuse 2, zumindest eine Ventileinrichtung, beispielsweise in der Art eines Bypassventils und/oder eines Druckbegrenzungsventils, integriert sein, wobei das Modulgehäuse 2 selbst beispielsweise als Kunststoffspritzgussteil oder als Graugussteil ausgebildet sein kann. Neben den in das Modulgehäuse 2 integrierten Leitungen 7 kann das Modulgehäuse 2 auch einen Zu- und einen Ablauf für das zu pumpende bzw. zu filternde Fluid aufweisen und über diesen Zu- bzw. Ablauf an ein Fluidsystem angeschlossen werden. Ebenso ist denkbar, dass in das Modulgehäuse 2 ein Thermobypassventil integriert ist, dass das erfindungsgemäße Pumpen- und Filtermodul 1 beispielsweise an einen Kühler angeschlossen werden kann.

Bei einer weiteren vorteilhaften Ausführungsform der erfindungsgemäßen Lösung, ist das Modulgehäuse 2 zur Aufnahme unterschiedlich großer Pumpen 4 und/oder unterschiedlich großer Filtereinrichtungen 6 ausgebildet. Hierdurch lässt sich das erfindungsgemäße Modulgehäuse 2 besonders flexibel einsetzen, wobei unterschiedlich große Pumpen 4 bzw. unterschiedlich große Filtereinrichtungen 6 beispielsweise über geeignete Adapterelemente anschließbar sind. Das gemäß den Fig. 1 und 2 gezeigte Pumpen- und Filtermodul 1 ist dabei selbstverständlich lediglich rein exemplarisch zu verstehen, so dass die Pumpe 4 und die Filtereinrichtung 6 nicht parallel zueinander, sondern beispielsweise auch gegenüberliegend oder abgewinkelt zueinander am Modulgehäuse 2 angeordnet sein können. Mit dem erfindungsgemäßen Pumpen- und Filtermodul 1 lässt sich auf jeden Fall ein Montageaufwand deutlich reduzieren, da das erfindungsgemäße Pumpen- und Filtermodul 1 separat vorgefertigt werden kann und beispielsweise erst im Rahmen einer Endmontage an weitere Bauteile, wie beispielsweise eine Windkraftanlage oder ein Hydrauliksystem, angebaut wird. Von besonderem Vorteil ist zudem, dass die Leitungen 7 bereits einen integralen Bestandteil des Modulgehäuses 2 bilden können und dadurch nicht mehr aufwändig und teuer extern verlegt werden müssen.

## Patentansprüche

1. Kombiniertes Pumpen- und Filtermodul (1) insbesondere für Windkraftanlagen mit einem Modulgehäuse (2), welches eine Aufnahme (3,5) für eine Pumpe (4) und eine Filtereinrichtung (6) aufweist, wobei in dem Modulgehäuse (2) auch zugehörige Leitungen (7) integriert sind.

2. Pumpen- und Filtermodul nach Anspruch 1,
**dadurch gekennzeichnet,**
**dass** das Pumpen- und Filtermodul (1) zur Versorgung einer Nabenschmierung eines Rotors einer Windkraftanlage mit Schmieröl ausgebildet ist.

3. Pumpen- und Filtermodul nach Anspruch 1,
**dadurch gekennzeichnet,**
**dass** das Pumpen- und Filtermodul (1) Bestandteil einer Hydraulikanlage ist.

4. Pumpen- und Filtermodul nach einem der vorhergehenden Ansprüche, **dadurch gekennzeichnet,**
**dass** das Pumpen- und Filtermodul (1) zumindest eine Ventileinrichtung, insbesondere ein Bypassventil und/oder ein Druckbegrenzungsventil, aufweist.

5. Pumpen- und Filtermodul nach einem der vorhergehenden Ansprüche, **dadurch gekennzeichnet,**
**dass** Modulgehäuse (2) als Kunststoffspritzgussteil ausgebildet ist.

6. Pumpen- und Filtermodul nach einem der Ansprüche 1 bis 5, **dadurch gekennzeichnet,**
**dass** das Modulgehäuse (2) einen Zu- und einen Ablauf für zu pumpendes/filterndes Fluid aufweist.

7. Pumpen- und Filtermodul nach einem der vorhergehenden Ansprüche, **dadurch gekennzeichnet,**
**dass** in das Modulgehäuse (2) ein Thermobybassventil integriert ist.

8. Pumpen- und Filtermodul nach einem der Ansprüche 1 bis 7, **dadurch gekennzeichnet,**
**dass** das Modulgehäuse (2) zur Aufnahme unterschiedlicher Pumpen (4) und/oder unterschiedlicher Filtereinrichtungen (6) ausgebildet ist.
